Europäisches Patentamt

European Patent Office

Office européen des brevets

(19)

(11) Publication number: **0 133 494**
**B1**

(12) **EUROPEAN PATENT SPECIFICATION**

(45) Date of publication of patent specification: **29.03.89**

(51) Int. Cl.⁴: **A 01 G 31/02**

(21) Application number: **84108533.5**

(22) Date of filing: **19.07.84**

(54) Apparatus for growing plants.

(30) Priority: **05.08.83 SE 8304299**

(43) Date of publication of application:
**27.02.85 Bulletin 85/09**

(45) Publication of the grant of the patent:
**29.03.89 Bulletin 89/13**

(84) Designated Contracting States:
**AT CH DE FR GB LI NL SE**

(56) References cited:
**DE-A-2 001 360**
**DE-A-2 732 982**
**FR-A-1 521 065**
**GB-A-2 077 082**
**US-A-4 028 847**
**US-A-4 216 618**

(73) Proprietor: **ABECE AKTIEBOLAG**
**S-610 53 Enstaberga (SE)**

(72) Inventor: **Jidell, Karl Bernt**
**Stora Bergsgränd 12**
**S-611 00 Nyköping (SE)**

(74) Representative: **Hanell, Stig et al**
**RAYMOND SWENSON PATENTBYRA AB Sankt**
**Eriksterrassen 72A**
**S-112 34 Stockholm (SE)**

EP 0 133 494 B1

Courier Press, Leamington Spa, England.

## Description

This invention relates to an apparatus for growing plants and of the kind in which a plurality of elongate troughs, each of which is adapted to receive a plurality of longitudinally spaced plants, while being supplied with nutrient solution are intermittently advanced in succession and in a direction perpendicular to the lengths of the troughs themselves over and along a generally horizontal bed, on which the troughs are slidable and rested in parallel relationship, and in which the advancement of the troughs is effected by powered driving means capable of increasing the spacings between adjacent troughs as the plants therein develop.

Such apparatuses are mainly used for growing lettuce and other vegetables as well as decorative plants on a commercial scale in hothouses where the development of the plants is promoted by favourable temperature and atmospheric conditions and sometimes also by artificial light. Nevertheless it will take a fairly long time, commonly more than a week, for the plants to mature and, hence, for each trough to pass through the apparatus.

Since the sound development of the individual plants may easily be seriously disturbed if the growing plants come too close to one another, and since it is desirable to utilize the limited bed area for as many plants as possible, it is common practice in an apparatus of the kind referred to above to arrange the seedlings in single rows only in troughs which are so narrow in width that the foliages of the growing plants will fairly soon extend over the lateral borders thereof, and to gradually increase the spacings between adjacent troughs in approximate pace with the horizontal expansion of the plants as the troughs are advanced along the bed.

A typical example of an apparatus of the kind in question is disclosed in US-A-4 216 618 which suggests that all the troughs on the bed should be simultaneously moved at selected intervals by means of a pair of parallel, synchronously rotated conveyor screw members forming part of the bed proper and having different but mutually identical pitches along different portions of their lengths. The result of this is an extremely expensive apparatus which operates poorly within those sections of the bed where a high pitch of the screw members is used, and which intermittently needs an extremely high driving power. Furthermore, if it becomes desirable to change the pattern of advance of the troughs along the bed, e.g. for accomodating the apparatus to plants having a different rate of growth, it will be necessary to replace considerable portions of the screw members which is not only expensive but also laborious and time-consuming.

In the prior art (No. Patent Specification 149527) there has also been suggested a somewhat similar kind of apparatus in which the troughs containing the growing plants are moved as well as supported by means of a plurality of partly overlapping belt conveyors arranged in succession and all being driven by individual motors each of which must be capable of accelerating its own conveyor also when the latter carries a full load of troughs. Through a complex system of sensors and switches the various conveyers are started and halted in a manner to transfer the troughs one by one from one conveyor to the next, and during each such transfer the troughs are subjected to lateral tilting movements in combination with abrupt deceleration and acceleration whereby they may easily tumble over and lose their contents. In addition, the troughs may easily slip on the conveyors and thereby accidentally change their relative positions so that their proper advance is disturbed. Also in this case a change of the pattern of advance of the troughs along the bed will require replacement of various parts of the apparatus and is laborious, time-consuming and expensive.

It is the aim of the present invention to provide an improved apparatus of the kind defined in the introductory paragraph in which the trough driving means require only moderate motor power and are capable of varying the spacings between the troughs on the bed in any desired pattern without structural alterations. It is also an object of the invention to provide smooth, careful and accurate advancement of the troughs while positively preventing them from tumbling over during their transports to selected new positions on the bed.

To achieve these aims the invention is generally based on the concept that the troughs on the bed should be moved individually and one at a time by driving means which are common to at least a certain group of adjacent troughs and movable along the bed in a controllable manner. Accordingly, an apparatus embodying the invention will present the features set forth in the appended claim 1, preferred forms of the apparatus being further defined in the subclaims following thereafter.

For further elucidation of the invention a preferred embodiment thereof will now be more closely described with reference to the accompanying drawings, in which

Fig. 1 is a diagrammatic illustration of the plant growing cycle taking place in a preferred form of apparatus embodying the invention,

Fig. 2 is a shortened and simplified side view of a preferred form of apparatus embodying the invention, and

Fig. 3 is a shortened cross sectional elevation taken along the line III-III in Fig. 2.

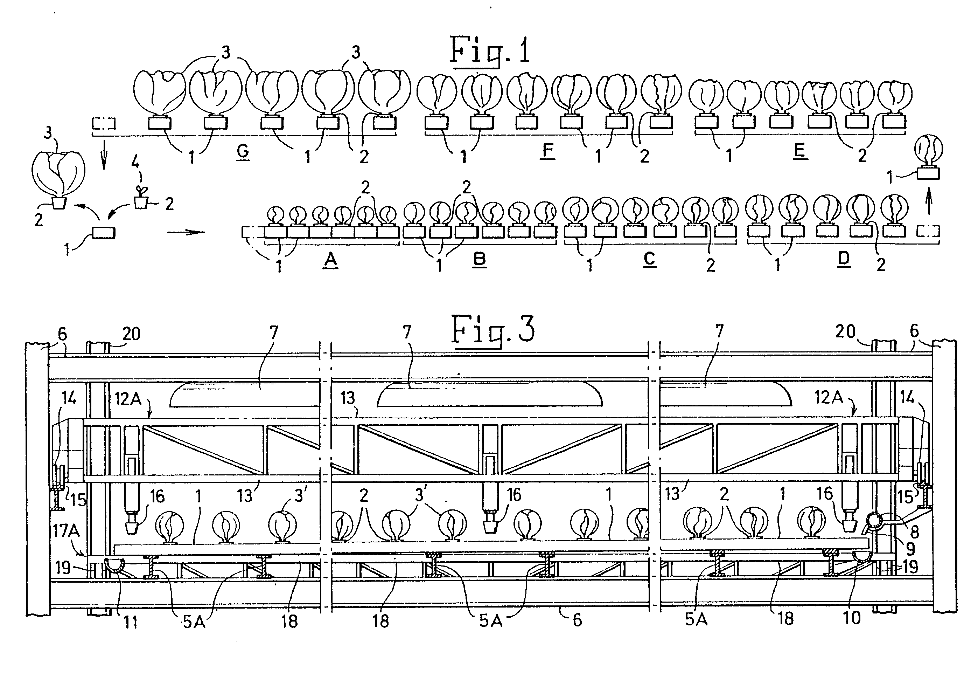

In Fig. 1 numeral 1 designates elongate troughs extending away from the viewer, and each such trough contains a long row of spaced apart pots 2, say about fifty or more, of which only one in each trough is visible in the figure. As illustrated, the troughs 1 are arranged in a generally closed circuit in which they are intermittently moved in a counterclockwise direction away from and back to a plant harvesting and trough reloading station, situated to the left in the figure, where the matured plants 3, assumed to be lettuce heads in the instant case, are removed from the troughs 1 together with their respective pots 2, and new pots containing seedlings 4 are inserted in each emptied trough before the latter is again circulated. Although, for the sake of simplicity, Fig. 1 shows only a limited total number of parallel troughs 1 it should be understood that in practice this number may be many hundreds depending on the desired production capacity and on the time it takes for the plants to mature.

As illustrated, the troughs 1 form successive groups, each occupying a different section A, B, C, D, E, F or G of the support on which they are rested (not shown), the troughs within section A containing plants which are still only little developed and need no more horizontal space than the pots 2, and the troughs of group G containing fully matured plants 3 ready for harvesting and needing considerably more space each in order not to interfere with each other. For this reason the spacings between adjacent troughs 1 are increased in a manner known per se as the troughs are advanced through the circuit. Thus within section A the troughs 1 stand close to each other in the same manner as they were put in to the left of the lower level of Fig. 1 after having received new pots 2 with seedlings 4, whereas the troughs 1 in section B are slightly spread apart, in section C a little more spaced and so on until the spacings between them have reached a maximum within section G. As can be seen the number of troughs 1 is the same within all the sections A to G, and it is to be understood that all the troughs of each group are moved over at selected time intervals from section to section as the plants in them grow up.

Although Fig. 1 may simply be understood to illustrate, within a limited drawing space, the mere advance of the troughs 1 from a loading station, where potted seedlings are inserted in them, to a separate harvesting station, where the grown-up plants are removed, on one and the same level, the emptied troughs being then returned from the harvesting station to the loading station in any suitable known manner, it also illustrates the troughs 1 may be advanced on two vertically spaced apart levels, one above the other, and be transferred one by one between these two levels by suitable elevator means. By such an arrangement considerable floor space may be saved within a hothouse without any reduction of the number of troughs or of the production capacity.

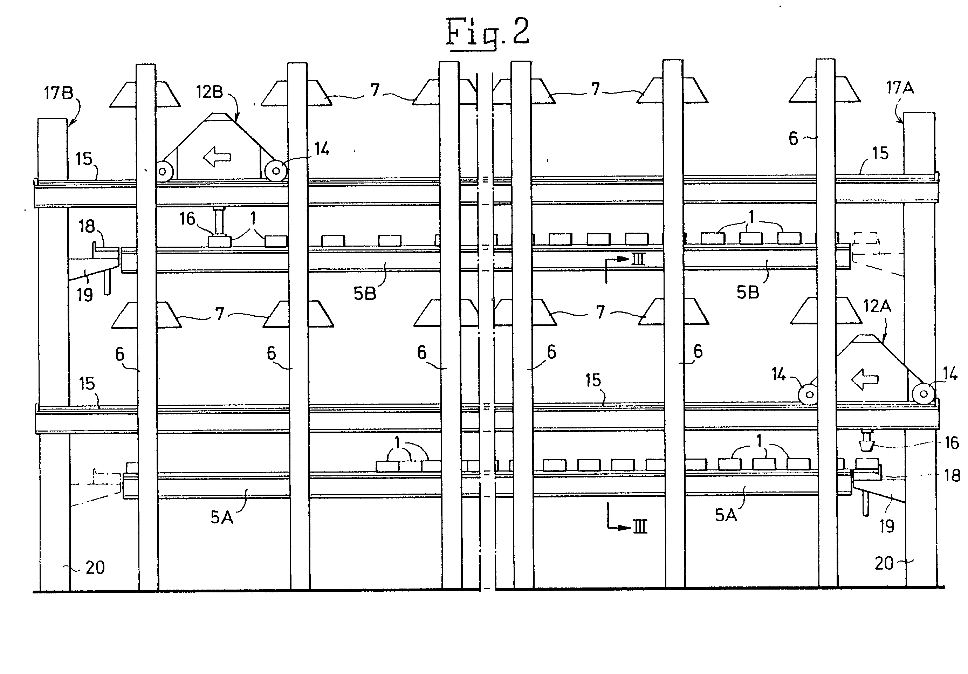

In Figs. 2 and 3 there is shown an apparatus for growing plants in which the concept just referred to is realized and in which also novel and improved means for advancing the troughs containing the plants to be grown and for simultaneously increasing the spacings between said troughs are used. Also in Figs. 2 and 3 the troughs are designated by numeral 1, the pots by numeral 2 and some, only partially developed, plants by numeral 3, the pots and plants being for the sake of simplicity shown only in Fig. 3.

In the apparatus of Figs. 2 and 3 the troughs 1 are distributed and rested on two vertically spaced bed sections arranged straight above one another and having the same lengths, the lower bed section being formed by a first group of spaced apart, parallel beams 5A, and the upper bed section being similarly formed by a second group of spaced apart beams 5B. The beams 5A and 5B are supported by a common post-and-beam structure generally designated by 6 and extend substantially horizontally in a direction perpendicular to the longitudinal directions of the elongate parallel troughs 1. The lengths of the beams must well exceed the combined widths of the troughs to be received thereon and may in practice frequently be in the order of fifty to a hundred meters, whereas the lengths of the troughs 1 for practical reasons preferably should not exceed about ten meters.

At a suitable height above each bed section 5A and 5B, respectively, there are provided a plurality of lamps 7 having light sources capable of emitting a growth promoting radiation evenly over the plants to be grown. If the apparatus is used in a greenhouse covered with light admitting material the lamps above the upper bed section 5B may be switched off during daytime or be entirely dispensed with.

Each group of beams 5A and 5B forming the respective bed sections is so adapted and designed that the troughs 1 resting thereon will slightly slope in their longitudinal direction towards one side of the apparatus as illustrated in Fig. 3. Above the upper ends of the sloping troughs 1 there is provided along the length of the respective bed section a tube 8 through which nutrient solution is pumped out from a source not shown and distributed to the various troughs through spout-like outlets 9, possible waste solution being collected in a first longitudinally extending chute 10 mounted immediately below. A similar, second longitudinally extending chute 11 mounted along the lower ends of the troughs takes care of the excess of nutrient solution having passed through the various troughs. The waste and excess solutions may be returned for recirculation to the source from which the tube 8 is supplied. The entire system for distributing and recirculating nutrient solution is old in the art and should need no further elucidation.

The troughs 1 are all freely rested on their respective bed sections and adapted to be individually displaced in sliding contact with the latter in a direction perpendicular to the troughs. Such displacement of each individual trough on each of the two bed sections is carried out by means of a single motor-driven carriage 12A and 12B, respectively. Each such carriage comprises an elongate, rigid truss structure 13 extending over the full width of its respective bed section in a direction generally parallel to the troughs 1 thereon. At its respective ends said truss structure 13 has wheels 14 rolling on a pair of guide tracks 15 extending along the length of the bed section, one on each side thereof, but being separated therefrom and supported by the post-and-beam structure 6. Each carriage 12A and 12B, respectively, is free to be independently reciprocated along the full length of its respective bed section 5A and 5B well above the troughs 1 and under the lamps 7, as shown in Fig. 3.

The respective carriages 12A and 12B are independently driven by suitable motors, not shown, to move at only a moderate speed, usually only a few meters per second, so that they can readily be halted in accurately selected positions along their respective bed sections. The manner in which they are driven is not important, but suitable measures must be taken to assure that they always maintain their positions parallel to the troughs. Thus, for example, each carriage may carry one or several remotely controlled electric motors driving suitable gears engaging with racks on the guide tracks 15, or each carriage may by means of a suitable system of ropes or chains be pulled backwards and forwards as required by stationary motors. Other driving alternatives well known per se may also be resorted to if so desired.

Each carriage 12A and 12B, respectively, has a plurality of driving dogs 16 mounted on its truss structure 13 in substantially uniformly spaced positions therealong. These driving dogs 16 of each carriage are vertically adjustable in unison relative to the truss structure 13 by remotely controllable means, such as electrically or pneumatically operated actuators, in order to occupy either an elevated position, shown in the lower right hand corner of Fig. 2 and in Fig. 3, or a lowered position, shown in the upper left hand part of Fig. 2. In their elevated positions the driving dogs 16 are able to freely pass over the troughs 1 resting on the related bed section 5A and 5B, when the carriage is reciprocated along the latter, whereas in their lowered positions they are able to drivingly engage any selected one of said troughs from above.

In the apparatus shown in the drawings the driving dogs 16 are frusto-conical in shape, thus resembling the pots 2 in which the plants to be grown are contained, and, when being lowered, they are adapted to seek themselves into and to thus enter the trough to be driven from above in order to thereby stabilize said trough and prevent it from tumbling over when the same is moved by the carriage in sliding contact with the bed. It is to be noted that all the driving dogs 16 of each carriage 12A or 12B are arranged to engage only one trough 1 at a time, and the number of driving dogs 16 must be sufficiently high in relation to the stiffness of the troughs to make certain that the troughs are not subjected to undue lateral bending during their sliding movements over the bed. If so desired, there may be provided two independently and alternatingly operable sets of driving dogs on each carriage, one on each side of the truss structure thereof, so that one of said sets may be used when the carriage is operative over one end portion of its related bed section, and the other set may be used when the carriage is operative over the opposite end portion of the bed.

As will be readily understood, any selected trough 1 on any one of the two bed sections may be moved by first positioning the related carriage in a manner to let its driving dogs engage the trough and by then lowering said driving dogs and repositioning the carriage, before the driving dogs are again disengaged from the trough. Since the trough is moved in sliding contact with the bed, the carriage will not be loaded by the weight of the trough, and the vertical position as well as the slope of the trough will remain unchanged throughout the operation. In order to increase the lateral spacings between the troughs when their positions on the bed are changed, the troughs must be individually moved in succession, and, of course, no trough should be repositioned unless the bed is free from other troughs over the full distance each trough is to be moved.

As best appears from Fig. 2, at each end of the two bed sections 5A and 5B there is provided an elevator 17A and 17B, respectively, these elevators being identical but mirror-reversed. Each such elevator comprises a shelflike elongate platform 18 supported by two brackets 19 each of which is guided in a hollow column 20. The two brackets 19 are vertically movable in synchronism by motorized lifting mechanisms not shown because they are sheltered in the respective columns 20 but being of any suitable kind well known per se. The platform 18 is adapted to -receive thereon a single trough at a time and has a length slightly exceeding that of the troughs 1. The platform 18 is arranged to move vertically along a path very close to the ends of the two bed sections 5A and 5B between a lower position, in which its top surface forms an extension of the bed section 5A, and an upper position, in which its top surface forms an extension of the bed section 5B.

The elevator 17A at one end of the apparatus is used to lift the troughs 1 one by one from the lower bed section 5A to the upper one 5B, whereas the elevator 17B at the opposite end thereof is used to lower the troughs from the upper bed section to the lower one, it being understood that each trough so lowered may then be emptied of matured plants and reloaded with potted seedlings while still resting on the lowered platform 18 for maximum convenience. The troughs to be lifted, and lowered respectively, are moved over to and removed from the platform 18 of the respective elevator by means of the carriages 12A and 12B in generally the same manner as they are repositioned on the bed sections as previously described.

In order to make such transfers of the troughs possible in the apparatus shown in the drawings, the tracks 15 for each carriage 12A and 12B are somewhat longer than the bed sections 5A and 5B and project with their respective end portions beyond the ends of the bed sections, so that each carriage may be moved to end positions in which its driving dogs 16 are situated in the path of the platform 18 of the elevator to be employed. Of course, as far as the lower carriage 12A is concerned, the same must then be removed from its respective end positions before the corresponding elevator 17A or 17B is operated.

The sequence of operation of the apparatus as a whole will be best understood if considered to be started from a situation similar to the one illustrated in Fig. 1, where the plants of the troughs 1 resting on the left hand portion of the upper bed section 5B are ready to be harvested and there is a free space for receiving the lowered and replenished troughs at the left hand portion of the lower bed section 5A. To begin with, the troughs on the upper bed section 5B containing matured plants are moved one by one in succession and by the upper carriage 12B to the elevator 17B to be lowered, emptied and replenished, whereupon they are pulled in by the lower carriage 12A on the free space of the lower bed section. When all the troughs containing matured plants have thus been transferred to the lower bed section 5A, they leave a similar, but in fact larger, free or empty space to the left of the upper bed section 5B.

Now the upper carriage 12B is first employed to successively reposition all the variously grouped troughs on the upper bed section 5B so that a free space, this time somewhat reduced, will result on the right hand portion of said upper bed section, to which troughs from the right hand end portion of the lower bed section 5A can be transferred, again one by one, by combined operations of both the two carriages 12A and 12B and the elevator 17A. This will leave a somewhat smaller free space on the right hand end portion of the lower bed section 5A which is in turn utilized for repositioning by means of the lower carriage 12A all of the troughs now resting on said lower bed section 5A until the situation is again the same as at the start of the entire cycle. Although such stepwise advance or repositioning of all the troughs through the apparatus may take a considerable time, this is no inconvenience since it will only be necessary to carry out the procedure once a day or even less frequently but, of course, preferably in connection with the harvesting of matured plants.

In practice the movements of the carriages 12A and 12B and of the elevators 17A and 17B as well as the proper adjustments of the driving dogs 16 of the respective carriages are all automatically governed by means of preferably computerized control aids, so that no human attention will be needed for such purposes.

## Claims

1. An apparatus for growing plants (3) and of the kind in which a plurality of elongate troughs (1), each of which is adapted to receive a plurality of longitudinally spaced plants, while being supplied with nutrient solution, are intermittently advanced in succession and in a direction perpendicular to the length of the troughs themselves over and along a generally horizontal bed (5A or 5B) on which the troughs are slidable and rested in parallel relationship, and in which the advancement of the troughs is effected by powered driving means (12A or 12B) capable of increasing the spacings between adjacent troughs as the plants therein develop, characterized in that the driving means comprises a carriage (12A or 12B) which is reciprocatable along the bed (5A or 5B) and is provided with driving dogs (16) adapted to be moved into and out of driving engagement with any selected one of the troughs (1) on the bed (5A or 5B) but to drivingly engage only one single trough (1) at a time and this in a plurality of points distributed along the length of the selected trough (1).

2. An apparatus according to claim I, wherein said carriage (12A or 12B) is movable well above the bed (5A or 5B) and the troughs (1) resting thereon on tracks (15) extending along but being separate from the bed proper (5A or 5B), and wherein said driving dogs (16) are vertically adjustable in unison relative to the carriage (12A or 12B) under remote control and adapted to drivingly engage the selected trough (1) in lowered operative positions.

3. An apparatus according to claim 2, wherein said driving dogs (16) of the carriage (12A or 12B) in their lowered operative positions are designed to stabilize the selected trough (1) in a manner to prevent overturning thereof when the trough (1) is being driven.

4. An apparatus according to claim 2 or 3, wherein said driving dogs (16) when being lowered into their operative positions are arranged to enter into the selected trough (1) from above.

5. An apparatus according to any one of the claims 1 to 4 inclusive, wherein said carriage (12A or 12B) comprises a truss structure (13) spanning at least a major part of the full width of the bed (5A or 5B), and wherein said driving dogs (16) are movably mounted on said truss structure (13) in spaced positions along the length thereof.

6. An apparatus according to any one of the preceding claims, wherein said reciprocatable carriage (12A or 12B) is movable to at least one end position in which the driving dogs (16) thereof become active beyond the corresponding end of the bed proper (5A or 5B) in order to thereby deliver or fetch a trough (1) to or from a separate trough support (18) located outside said bed end.

## Patentansprüche

1. Vorrichtung zum Züchten von Pflanzen (3), mit einer Vielzahl von langgestreckten Behältern (1), die je zum Aufnehmen einer Vielzahl voneinander getrennter und über die Länge des Behälters verteilte Pflanzen vorgesehen sind sowie einem im wesentlichen horizontalen Bett (5A oder 5B), auf welchem die Behälter verschiebbar und parallel zueinander bleibend angeordnet sind, und entlang welchem die Behälter, während sie einer Nährlösung zugeführt werden, intermittierend in Richtung rechtwinklig zu ihrer Länge verschiebbar sind, wobei die Vorschübe der Behälter durch kraftbetätigte Antriebsmittel (12A oder 12B) erfolgen, die befähigt sind, die Abstände zwischen benachbarten Behältern, je nachdem wie die Pflanzen sich darin entwickeln, zu vergrössern, dadurch gekennzeichnet, dass die Antriebsmittel einen längs des Bettes (5A oder 5B) hin- und herbewegbaren Wagen (12A oder 12B) enthalten, der mit Mitnehmern (16) ausgerüstet ist, welche in eine und aus einer antreibenden Verbindung mit irgend einem auf dem Bett (5A, 5B) angeordneten, ausgewählten Behälter (1) bewegbar sind, wobei gleichzeitig die antreibende Verbindung mit nur einem einzigen Behälter (1), in einer Mehrzahl über die Länge des ausgewählten Behälters (1) verteilten Punkten herstellbar ist.

2. Vorrichtung nach Anspruch 1, dadurch gekennzeichnet, dass der Wagen (12A oder 12B) in einem Abstand über dem Bett (5A oder 5B) und der darauf ruhenden Behälter (1) auf Schienen (15) bewegbar ist, welche sich längs dem eigentlichen Bett (5A oder 5B) aber getrennt davon erstrecken, und dass die Mitnehmer (16) fernsteuerbar, gemeinsam gegenüber dem Wagen (12A oder 12B) vertikal verstellbar sind, wobei die Mitnehmer dazu bestimmt sind, in ihren abgesenkten Betriebsstellungen den ausgewählten Behälter (1) antreibbar zu verbinden.

3. Vorrichtung nach Anspruch 2, dadurch gekennzeichnet, dass die Mitnehmer (16) des Wagens (12A oder 12B) in ihren abgesenkten Betriebsstellungen dazu bestimmt sind, den ausgewählten Behälter (1), zum Verhindern eines Umstossens während des Antreibens zu stabilisieren.

4. Vorrichtung nach Anspruch 2 oder 3, dadurch gekennzeichnet, dass die Mitnehmer (16) beim Absenken in ihre Betriebsstellungen zum Einfahren von oben in den ausgewählten Behälter (1) angeordnet sind.

5. Vorrichtung nach einem der Ansprüche 1 bis 4, dadurch gekennnzeichnet, dass der Wagen (12A oder 12B) eine Fachwerkbrücke (13) umfasst, welche mindestens einen Hauptteil der vollen Breite des Bettes (5A oder 5B) überspannt, wobei die Mitnehmer (16) an dieser Fachwerkbrücke (13) in voneinander getrennten und über die Länge der Brücke verteilten Positionen bewegbar montiert sind.

6. Vorrichtung nach einem der vorangehenden Ansprüche, dadurch gekennzeichnet, dass der hin- und herbewegbare Wagen (12A oder 12B) mindestens in eine Endposition bewegbar ist, in welcher dessen Mitnehmer (16) jenseits des entsprechenden Endes des eigentlichen Bettes (5A, 5B) wirksam werden, um dabei einen Behälter (1) an einen getrennten, ausserhalb des genannten Bettendes angeordneten Behälterträger (18) zu liefern oder ihn davon abzuholen.

**Revendications**

1. Appareil destiné à la croissance de plantes (3) et du type dans lequel une pluralité de bacs allongés (1), chacun d'eux étant adapté pour recevoir une pluralité de plantes espacées longitudinalement tout en étant alimentées par une solution nutritive, sont avancés successivement de façon intermittente dans une direction perpendiculaire à la direction longitudinale des bacs, sur et le long d'un plancher pratiquement horizontal (5A ou 5B) sur lequel les bacs peuvent glisser et rester parallèles, et dans lequel l'avancement des bacs est effectué par des moyens d'entraînement (12A ou 12B) capables d'accroître les intervalles entre bacs adjacents alors que les plantes y sont en train de se développer, caractérisé en ce que les moyens d'entrainement comprennent un chariot (12A ou 12B) qui est déplaçable dans un sens ou dans l'autre le long du plancher (5A ou 5B) et qui est pourvu de taquets d'entraînement (16) prévus pour être déplacés pour venir en contact d'entraînement avec un bac quelconque choisi parmi les bacs (1) sur le plancher (5A ou 5B) ou s'en dégager, mais n'entraînant qu'un seul bac (1) à la fois, et ce en une pluralité de points répartis le long du bac choisi (1).

2. Appareil suivant la revendication 1, dans lequel ledit chariot (12A ou 12B) peut se déplacer bien au-dessus du plancher (5A ou 5B) et les bacs (1) qui y sont posés sur des rails (15) disposés le long du plancher correspondant (5A ou 5B) en étant écartés, et dans lequel lesdits taquets d'entraînement (16) sont ensemble réglables verticalement par rapport au chariot (12A ou 12B) par une télécommande et adaptés pour venir en position d'entraînement du bac choisi (1) quand ils sont en position basse.

3. Appareil suivant la revendication 2, dans lequel lesdits taquets d'entrainement (16) du chariot (12A ou 12B), en position basse sont prévus pour stabiliser le bac choisi (1) de manière à éviter son renversement quand le bac (1) est entraîné

4. Appareil suivant la revendication 2 ou 3, dans lequel lesdits taquets d'entrainement (16), quand ils sont abaissés en position de fonctionnement, sont prévus pour entrer par dessus dans le bac choisi (1).

5. Appareil suivant l'une des revendications 1 à 4, dans lequel ledit chariot (12A ou 12B) comprend une structure en poutrelles (13) s'étendant sur au moins une majeure partie de la largeur complète du plancher (5A ou 5B), et dans lequel lesdits taquets d'entraînement (16) sont montés mobiles sur ladite structure en poutrelles (13) dans des positions espacées le long de sa longueur.

6. Appareil suivant l'une des revendications précédentes, dans lequel ledit chariot (12A ou 12B) mobile dans un sens ou dans l'autre peut être déplacé vers au moins une position extrême dans laquelle ses taquets d'entraînement (16) deviennent actifs au-delà de l'extrêmité correspondante du plancher correspondant (5A ou 5B) pour ainsi délivrer un bac (1) à un support (18) de bac séparé situé en dehors de ladite extrêmité de plancher ou le retirer de ce support.

Fig.1

Fig.3

# Fig.2

EP 0 133 494 B1